(19) Europäisches Patentamt
European Patent Office
Office européen des brevets

(11) **EP 2 325 435 B2**

(12) **NEW EUROPEAN PATENT SPECIFICATION**
After opposition procedure

(45) Date of publication and mention
of the opposition decision:
**30.09.2020 Bulletin 2020/40**

(45) Mention of the grant of the patent:
**24.10.2012 Bulletin 2012/43**

(21) Application number: **09176859.8**

(22) Date of filing: **24.11.2009**

(51) Int Cl.:
**E21B 17/042** *(2006.01)*    **F16L 15/00** *(2006.01)*

(54) **Threaded joint sealed to [ultra high] internal and external pressures**

Verschraubung für [ultrahoch] abgedichteten internen und externen Druck

Joint fileté étanche à des pressions internes et externes [extrêmement hautes]

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**25.05.2011 Bulletin 2011/21**

(73) Proprietor: **Tenaris Connections B.V.**
**1019 GM Amsterdam (NL)**

(72) Inventors:
• **Mazzaferro, Gaston**
  **2804, BUENOS AIRES (AR)**
• **Carcagno, Gabriel E.**
  **2804, BUENOS AIRES (AR)**
• **Ono, Tatsuo**
  **Kawasaki Kanagawa 210-0855 (JP)**
• **Santi, Nestor J.**
  **2804, BUENOS AIRES (AR)**

(74) Representative: **EP&C**
  **P.O. Box 3241**
  **2280 GE Rijswijk (NL)**

(56) References cited:
EP-A1- 0 329 990        WO-A1-03/048623
WO-A1-2004/023020       WO-A1-2004/033951
WO-A1-2004/109173       WO-A1-2008/110494
DE-C1- 4 446 806        FR-A1- 2 855 587
US-A- 2 636 753         US-A- 2 992 021
US-A- 4 445 265         US-A- 4 703 954
US-A1- 2009 033 087     US-B2- 6 971 681

• **Extract of catalogue no. 940 VAM published in July 1994**

EP 2 325 435 B2

**Description**

**Field of the invention**

The present invention relates to a threaded joint for joining tubes used especially in the field of OCTG (Oil Country Tubular Goods), such as pipes in gas or oil production and/or casings when drilling wells.

More particularly, the invention relates to high performance oil and gas industry joints for applications in environments under high pressure and high temperature and in ultra deep wells.

**State of the art**

Particularly demanding conditions, such as extremely high pressures and temperatures, often combined with high compression-tension-torque forces acting on the joint, can be found in environments existing in ultra deep wells, high pressure-high temperature wells and salt domes. Pressures found in such wells may be around 20,000 psi (twenty thousand pounds per square inch).

Such requirements are generally met by the use of pipes with an above-standard wall thickness, namely thicker than 12.7 mm (0,5 inch).

A joint should be capable of offering similar or equal performance to pipe body resistance, when both pipe and joint are submitted to compression and/or tension under internal and/or external pressures. While prior art standard joints are capable of matching the performance of standard pipe (meaning standard wall thickness), there is still the need for a joint capable of matching the performance of a thick wall pipe.

While the industry has recently become able to produce thicker pipes by improving mainly heat treatment processes and chemical compositions, there is a shortcoming regarding joints capable of equaling the performance of the newly developed thick wall pipe.

Patents US6851727, US6905150, US7255374, US6921110 disclose solutions for joints offering optimum running performance and maximum structural capacity, but the solutions therein disclosed are mainly applicable to pipes with standard wall thickness that cannot be used in extremely adverse conditions like those imposed by ultra high internal and external pressures.

There have been attempts to improve threaded joints for use on pipes with thick walls, e.g. for casing sizes with enhanced resistance to very high external pressure.

Most of the prior art joints considered above are not capable of meeting the requirements set for the aforementioned adverse environmental conditions. One common reason is that sealability at ultra high pressures requires high interferences and torque values, and therefore these prior art premium joints normally experience critical plastic deformations and galling during make-up operation. In designing threaded joints in this technological field, every slight change in design of one feature constituting the joint may have unforeseen effects in the overall performance, and needs to be carefully evaluated. Solutions that are appropriate for pipes of standard state of the art wall thickness ranges do not give the same performances on pipes with thicker walls, and the consequences of introducing even small configuration changes may yield unforeseen and non-obvious results which must be thoroughly tested before they can be accepted. The fact that the pipe body is within above-standard wall ranges, i.e. with thicker wall, would make unpredictable the performance of a joint originally designed for standard thickness pipes.

This need is still felt for a top performance Oil and Gas industry joint with optimum running performance and maximum structural capacity capable of facing the most demanding service conditions under extremely high pressures and temperatures, combined with compression-tension-torque forces acting on the joint. Additionally, such joints are required to meet the highly demanding requirements set by Standards that apply to the industry, e.g. ISO 13679 CAL IV.

Patent US6543816 discloses a threaded thick wall joint. One embodiment has two metal-to-metal seals. One of the seals is an internal seal, positioned near the pin nose. The other seal is positioned at the middle of the thread. Such an intermediate seal is difficult to manufacture in practice, increasing the machining time and cost, since the threaded portions tool needs to duplicate its entrance and exit, there being two threaded parts that have to be in phase. This last feature needs a precision operation that is feasible at a manufacturing plant, but not generally achievable in repair shops.

Additionally, half the thread remains beyond the metal-to-metal seal, thus unprotected from contact with external fluids surrounding the pipe. By placing the metal-to-metal seal at a position where there is about a 50% wall thickness available in both pin and box, there is a trade-off between such structural advantage and the need to seal the joint against the external fluids. Leaving unprotected half the threaded area is too high a cost to pay in an aggressive environment such as a sour service environment, since external high pressure and corrosive fluids combine to harm threaded portions surface, thus compromising the performance of the whole joint. Another embodiment of US6543816 only features a single intermediate metal-to-metal seal, a configuration which is even worse, since the internal thread is also unprotected against the internal pressure and corrosion of the fluids circulating within the pipe string.

US2636753 is considered the closest prior art publication disclosing a method and construction for connecting a part of a tool joint to the end of a length of drill pipe through a combination of threaded and shrink-fitted connection. To make the connection fluid tight, the connection is provided, at the two extremities of the threaded seal, with an internal and an external metal to metal seal. The sealing at both ends of the connection are constituted one by the mating of two cylindrical surfaces and the other by the mating of two critically tapered conical surfaces. There is no mention in this documents of the possibility to choose other mating surfaces of different geometrical shape.

When dealing with extremely high pressures, if external pressure reaches the internal seal and/or internal pressure reaches the external seal, as such seals are not designed to withstand extreme pressures arriving from the threaded portion, they may be overcome by the pressure, in the sense that contact pressure may be overcome by fluid pressure, and/or a plastic deformation may take place, thus leading to failure of the sealing function of the joint.

Finite element analysis (FEA) tests of prior art joints with only one internal metal-to-metal seal show that such joints are not capable of providing performance similar or equal to pipe body resistance, when both pipe and joint are submitted to compression and/or tension under internal and/or external pressures. When extremely high external pressure is applied, the internal seal of a prior art joint is overcome by the pressure and opens, i.e. loses tightness, Such failure is due to external pressure acting against the internal metal-to-metal seal, which deforms and opens the pin nose and the metal-to-metal seal.

## Summary of the invention

The main object of the present invention is to provide a threaded joint for thick wall pipe which overcomes the above mentioned drawbacks and meets operative requirements set for use in very adverse environmental conditions.

Another object of the present invention is to provide a pipe joint having a reliable and stable high pressure sealability, against both internal and external pressures.

The above mentioned objects are achieved in accordance with the present invention by means of a threaded joint for pipes according to claim 1.

By virtue of the aforementioned features the joint of the invention Is able to deal with such stresses comfortably while remaining within the elastic field and still avoiding galling.

In contrast to most joints of the state of the art providing only a single, generally internal metal-to-metal seal for ensuring gas tightness of the whole joint, the present Invention provides a joint having a combined sealing action of internal and external seals, with reliable sealing efficiency during operation, which prevents occurrence of galling in the metal-to-metal seals during make-up.

By means of an optimization and a synergy of the geometric variables, the joint of the present invention achieves an external metal-to-metal seal which protects the whole threaded portion while still ensuring structural stability of the seal and the required contact pressures between sealing surfaces. Similarly, an internal metal-to-metal seal protects the threaded portion from the internal fluids entering between the threads.

The solution according to the invention, including a dual metal-to-metal seal one of which is internal and the other external with respect to the thread, is capable of providing reliable sealability due to very stiff, rigid, stable contact pressure by virtue of pin and box design optimized for thick wall pipes. This overcomes a common problem in such cases, i.e. galling due to high contact pressures in the metal-to-metal seals, by reducing contact pressure through a controlled interference during make-up.

## Brief description of the figures

Further characteristics and advantages of the invention will become more apparent in the light of the detailed description of a preferred but not exclusive embodiment of a threaded joint for pipes described by way of a non-limiting example, with the aid of accompanying drawings in which:

Figure 1 shows an axial section of a detail of a joint according to the invention;
Figure 2 shows an enlargement of a detail of figure 1;
Figure 3a shows an enlarged sectional detail of the thread of a box with a protective layer on the thread in another embodiment of a joint according to the invention and
Figure 3b shows an enlarged sectional detail of a pin with a protective layer in another embodiment of a joint according to the invention.

## Detailed description of preferred embodiments of the invention

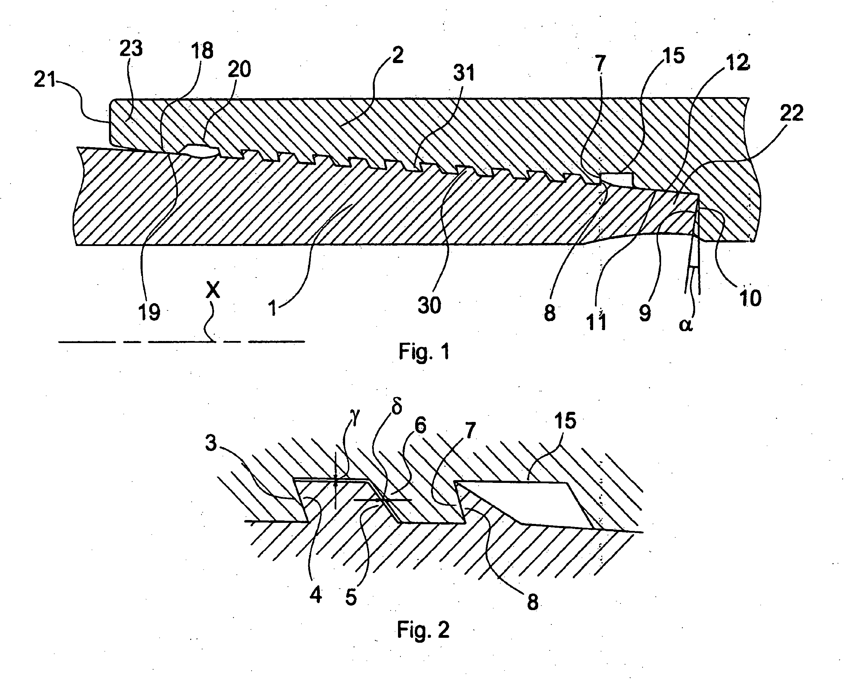

With particular reference to Figures 1 and 2, there is shown a threaded joint or connection for joining pipe segments, especially for pipes of the thick wall type. In the context of this description, in using the term "thick wall", it is intended that the wall of the pipe has a thickness above 0,5 inch. In any event, the joint of the invention is particularly advantageous for use on pipes having a nominal wall thickness of above 0,7 inch.

The joint of the invention comprises a male member, commonly defined as pin 1 with external male threaded portion 30 and a female member commonly defined as box 2 with internal female threaded portion 31 near a free end. The pin 1 has a sealing surface 11 before the beginning of the threaded portion 30 and a second sealing surface 19 beyond the end of the threaded area on the opposite side. Similarly, the box 2 has a sealing surface 12 on the inner side with respect to the threaded portion 31 and a second sealing surface 18 on the opposite side of the threaded portion 31.

The sealing surfaces of both pin 1 and box 2 mate after make-up to respectively form an internal and an external metal-to-metal seal, wherein the internal seal is produced by the reciprocal contact of the surfaces 11 and 12 and the external seal is produced by the reciprocal contact of the surfaces 18 and 19. The metal-to-metal seals are both made by a contact between toroidal to frusto-conical surfaces. The internal seal is made by a pin toroidal surface 11 and a box frusto-conical surface 12, and the external seal is made by a pin frusto-conical surface 19 and a box toroidal surface 18. The toroidal surface 11 is provided on the pin 1 near the pin nose and the frusto-conical surface 12 is provided on that portion of the internal surface of the box in the vicinity of the abutment shoulder 10. In the case of the external seal the toroidal surface 18 is on the box 2 near the box nose 23 and the frusto-conical surface 19 is on the external surface of the pin 1 close to the area where the cylindrical external surface of the pipe begins. Such a configuration positions the circular (so defined when considered on a plane section) or toroidal surface (so defined when considered tri-dimensionally) on the less rigid parts, i.e. pin free end and box free end, while positioning the tapered surface on the stiffer parts, i.e. that end of the threaded portion of pin and box that is closer to the pipe body.

The radius of toroidal sealing surfaces 11 and 18 of respectively pin 1 and box 2 is comprised in the range between 30 and 100mm, and preferably has a value of about 80mm. This radius magnitude range optimizes seal performance. While too small a radius may produce detrimental stress concentrations due to very high contact pressure, too large a radius (beyond the mentioned range) would, in contrast, tend to behave as a tapered surface. FEA tests confirm that a radius in a range between 30 and 100 mm gives the joint a sealability that meets the pipe body performance.

Box nose 23 at made-up joint provides a non abutting end 21, i.e. no surface transversal to the joint axis X is positioned in front of the end surface 21, neither close thereto nor distant therefrom, when the joint is assembled. Preferably, in the solution according to the invention, box 2 is a coupling or sleeve and not the extremity of a pipe of commercial length, in other words a short coupling or sleeve is optimally used to join two segments of pipe. In this case, this type of joint is also commonly called in this technical field as T&C (i.e. threaded and coupled).

Pin nose 22 has an end surface or abutting shoulder 9 that abuts against a mating box shoulder 10 after make-up is completed. Both abutting shoulder 10 and pin end surface 9 are preferably tapered with a negative angle $\alpha$ or equal to nil with respect to a plane perpendicular to the joint axis X.

The threaded portions 30 and 31 can be made with various profiles, however better performance is achieved when the threaded portions are chosen with a hooked thread, with an angle of the load flanks 3 and 4 preferably comprised between -10º and 0º. More preferably the load flank angles of the thread are set at values comprised between -7 and -2.5°.

This thread shape enhances the joint overall sealing performance, which was verified by tests using FEA models. In fact by means of FEA analysis, the indicator "sealing performance" shows an improvement when using negative load flank angles in the threads.

In order to reduce sliding distance and to provide an easier stabbing and faster make-up of the joint, a preferred type of thread to be used on the joint is a hooked thread with less than 5 threads per inch (TPI), preferably a 3TPI thread with crest to root contact. Alternatively a 4TPI thread can also be advantageously used. The large pitch of the thread, 3TPI, or 4TPI in an alternative embodiment, minimizes the risk of cross threaded portions as well as the number of turns up to the power tight position and contributes to an easy and safe make-up.

Preferably a thread design is chosen such that root to crest contact between box thread crest and pin thread root and diametrical clearance between box thread roots and pin thread crests is provided.

Advantageously the thread is tapered in the axial direction, wherein the taper angle has a slope in the range of 7 to 15% to the joint axis X, preferably about 11 %, where n% means here the angle between the thread line and the axis X, having the value arctg(n/100). A thread slope of such magnitude allows easy and safe make-up operation. The high slope chosen for the thread taper, ensuring fast make-up, determines a deep stabbing that contributes to the alignment of the pipe with the coupling, or box, during the assembling of the pipe string.

The diametrical taper of pin and box frusto-conical sealing surfaces 12 and 19 is set greater than the thread taper, with a slope in the range between 20 and 30%, preferably around 25%. In a preferred embodiment of the joint, the taper of the frusto-conical sealing surface 12 on the box is smaller than the taper of frusto-conical sealing surface 19 of the pin. This feature enables a make-up sequence to be achieved whereby threaded portions 30, 31 close firstly, internal seal 11, 12 closes secondly, and external seal 18, 19 closes lastly. The dope distribution on the threaded portions is thus improved, preventing dangerous pressure peaks caused by dope entrapment in thread interstices.

The joint provides further for a first dope expansion annular groove 15 positioned on the internal surface of the box 2 near the abutment surface 10. More advantageously, a second dope expansion annular groove 20 is provided at the second end of the threaded portions 31 before the external seal 18, 19 on the internal surface of the box 2. The volume of each dope expansion annular groove, measured in mm³, is between 10% and 50% of the square of the nominal external diameter (OD) of the pipe, i.e. their volume is determined by the following empirical formula

$$0,1 * (OD)^2 < VOLUME < 0,5 * (OD)^2$$

where OD is given in mm and VOLUME is given in mm³.

The male and female threads are designed with such dimensions that, after make-up of the joint is completely performed, there remain gaps between stabbing flanks 5, 6 of pin 1 and box 2 threads. The distance between the stabbing flanks of threads has a magnitude comprised in the range between 0,01mm and 0,12mm when measured on a projection parallel to the joint axis X. The stabbing flank angle is defined between 20 and 30°.

In addition to the advantages already mentioned above, the joint of the invention provides various other advantages of which a non exhaustive list is given hereafter. The provision of dual metal-to-metal seals (internal and external to threaded portions) gives an improved performance, because external fluid pressure is prevented by the external seal from penetrating interstices between the threads and from reaching the internal metal-to-metal seal. On the opposite side internal fluid pressure is prevented from penetrating between the threads and from reaching the external seal.

Additionally, both internal and external metal-to-metal seals are also pressure energized during operation, namely, external fluid pressure energizes the external seal, and internal fluid pressure energizes the internal seal.

The joint of the invention can be used in several types of joints, namely, threaded and coupled, integral, flush or semi-flush.

For certain applications, integral and flush joints require particular hot or cold deformations, e.g. so-called swaging or expansion in proximity to the pipe ends prior to thread machining, and they may be detrimental for the properties of the steel of which the pipes and joint are made. Therefore, for uses in extremely high loading conditions, undeformed pin and box are preferred. Hence, even though the invention may be used in any kind of joint, a particularly advantageous performance is achieved when the invention is embodied in a threaded and coupled (T&C) joint. On the other hand, the higher cost of using the joint of the invention in integral joints is only justified when there is the need to make a flush or semi-flush joint, which may have a reduced tension efficiency, since the pin member needs to accommodate, within its wall thickness, both the threaded portion and all or part of the box nose.

The tests made on joints according to the invention have shown that both internal and external seals 11, 12, 18, 19 remain closed all along the whole von Mises envelope, even in the absence of internal or external pressure that contributes to energizing the seals when the joint is under real operative conditions.

The joint is particularly suited for supporting high axial compression forces on the pipe, forces that bring the lead-in flanks into reciprocal contact, and thus begin to bear the compression load parallel to the shouldering surfaces, while the area close to said surfaces is still in the elastic deformation state.

As already mentioned above, the features of the invention result in a convenient make-up sequence that optimizes dope evacuation and reduces galling, because the threaded portion is the first to be closed (i.e. "reaches the final position"), and only after the excess dope is squeezed from the threaded portion are the metal-to-metal seals closed. Such sequence ensures that no dope is entrapped at high pressures in the cavity defined between metal-to-metal seals after make-up, wherein the dope pockets 15, 20 act as additional "lungs" for the dope squeezed by the threads.

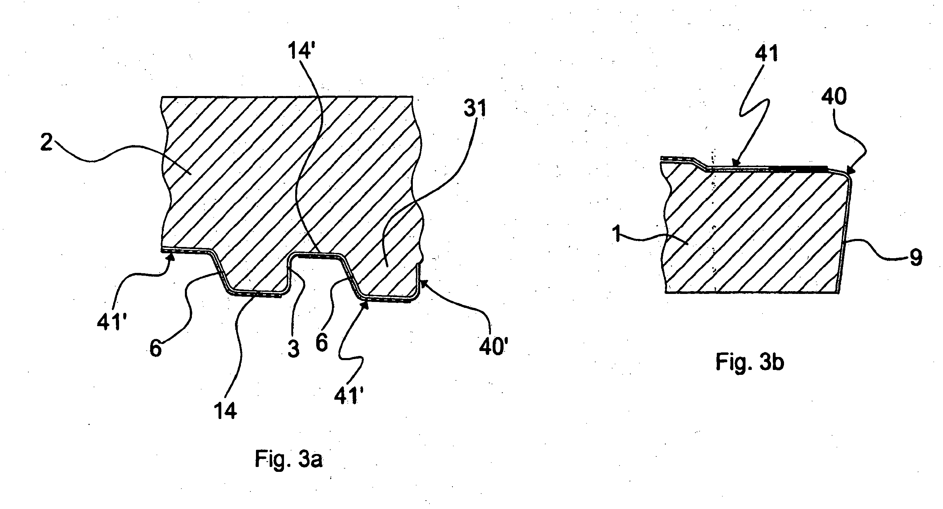

The joint of the invention can also be advantageously used in association with dope-free surface treatments of the joint. With particular reference to the embodiment of figures 3a and 3b, where corresponding elements of the joint are indicated with the same numerals of the above described embodiments, a surface treatment can be carried out to improve the quality of the joint and a preferred treatment consists in coating the box surface with Mn phosphate and leave a bare pin surface. Such treatment further improves galling resistance. Another improvement of the surface treatment is achieved by using API modified thread compound and the ecological thread compound together with Mn phosphate applied on a sand blasted surface.

In a first preferred embodiment of dope-free surface treatment, at least the surface of the threaded portion has a surface roughness Ra comprised between 2,0 $\mu$m and 6,0 $\mu$m, the thread surface being covered by a first uniform layer of a dry corrosion inhibiting coating and the first layer being covered by a second uniform layer of dry lubricant coating.

The threaded portion 30 of the pin 1 is provided with a protective layer on the surface of the thread. The threaded portion of the box 2 can have a perfectly similar shape or it can be made without the protective layer and be connected to the pin 1 provided with the protective layer. The protective layer, in this first preferred variant, comprises:

- a first layer of dry corrosion inhibiting coating, which is comprised of an epoxy resin containing particles of Zn, deposited on the thread metal surface; advantageously these particles are made of 99% pure Zn and the thickness of the first layer has a value between 10 and 20 $\mu$m, preferably comprised between 10 and 15 $\mu$m ;

- a second layer of dry lubricant coating, which is comprised of a mixture of $MoS_2$ and other solid lubricants in an inorganic binder and has a thickness between 10 and 20 $\mu$m, deposited over the surface of the dry corrosion inhibiting coating.

In a second preferred embodiment of dope-free surface treatment, at least the surface of the thread has a surface roughness Ra comprised between 2,0 $\mu$m and 6,0 $\mu$m, the thread surface being covered by a single uniform layer of a dry corrosion inhibiting coating containing a dispersion of particles of solid lubricant. The thickness of this single layer has a value comprised between 10 and 20 $\mu$m.

The threaded portion 30 of the pin 1 is provided with said single uniform protective layer on the surface of the thread. The threaded portion of the box 2 can have a perfectly similar shape or it can be made without the single uniform protective layer and be connected to the pin 1 provided with said single protective layer.

In both cases, the layer of dry corrosion inhibiting coating containing the dispersion of particles of solid lubricant can be applied by spraying, brushing, dipping or any other method in which the coating thickness can be controlled.

Regarding said first and second preferred embodiments of dope-free surface treatments, advantageously the pipe segments are adapted to be assembled without the necessity of a further surface preparation prior to running in the field site or the addition of oil or grease; it is possible to transport and store the pipes in the oilfield without risking that the pipes lose their integrity because of corrosion on the threaded portions forming the connections; the connections can be assembled in the oilfield without removing the corrosion protection layer. Tests have given as result that there is no galling neither on seal nor on thread and the connection had a very stable make up behaviour.

In a third preferred embodiment of dope-free surface treatment, the surface of the thread is provided with a coating comprising, in a first variant, a first layer with high friction and anti-seize properties laid on the overall surface of the pin 1 and a second layer with low friction properties laid on specific parts of the overall surfaces of either one of pin or box, or comprising, in a second variant, a first layer laid on the overall surface of the box 2 and a second layer laid on specific parts of the overall surfaces of either one of pin or box. The specific parts are those adapted to produce reciprocal radial contact, or at least partially radial, (for example, crests in the box, roots in the pin and metal-to-metal seals).

With reference to said third preferred dope-free surface treatment, an enlargement of a thread of the box 2 is shown in Fig. 3a, and an enlargement of an abutment or nose region of the pin 1 is shown in Figure 3b.

A first coating layer 40 laid on the overall surface of the pin 1 and a second coating layer 41 laid on a specific part of the overall surface of pin 1 are shown schematically in Figure 3b, e.g. in this case on the external surface of the pin 1. As shown in Figure 3a the threaded portion 31 of the box 2 matching the pin 1 can have a perfectly similar first layer 40' and second layer 41' on the surface or it can be made without the protective layers or still alternatively the layer can be made with a different structure or materials. It is also possible to have a coating only on the surface of the pin and no coating on the surface of the box.

The joint has, therefore, a low friction factor in the radial contact surfaces that provides adequate friction values to assure the make up of the joint at reasonable torque values comparable to those present when using dope; and a high friction factor on axial contact surfaces that provides a localised area with high friction capable of delivering high torsional strength to the joint once the shoulder gets in contact.

As one of ordinary skill in the art would understand, other coatings may be applied either below or above a polymeric coating. For example, a corrosion resistant layer can be applied over the polymeric coating, provided that the corrosion resistant layer does not affect the friction properties of the entire system. Additionally, the various coatings described herein may be applied to the overall surface of the pin member or box member, or only to selected areas. For example, the coatings may be applied to the threaded portions of the pin member and the box member, to the metal-to-metal seal portions of the pin member and the box member, or to the shoulder portion of the pin member and the box member without departing from the scope of the present invention.

In the embodiments of the joint having dope-free coating the male and female threads are designed with such dimensions that, after make-up of the joint is completely performed, there remain preferably no gaps between stabbing flanks 5, 6 of pin 1 and box 2 threads.

Alternatively, all the above mentioned preferred embodiments of dope-free surface treatments can be provided in combination with a very small amount of dope, in particular uses. In this case there is the necessity to take account of the dope expansion either by means of gaps of appropriate dimension between thread flanks or by providing grooves of appropriate volume at one or at both ends of the threaded portion of the box.

The innovative design of the joint of the invention was validated by FEA numerical modelling. The numerical simulation of the invention simulated those sequences of load conditions (various combinations of tension, compression, internal pressure, external pressure) defined by ISO 13679 standard. Such testing sequence was applied to various representative configurations, which are determined by combinations of several geometrical conditions (for example taper, interference, diameter, thickness) and steel grades. In regard to the sealability of the joint, the gas tightness of the metal-to-metal seals was verified for each load condition.

As a result, the joint of the present invention, according to the FEA analysis carried out, has proved that sealability against internal and/or external pressure is maintained under all the loading conditions tested.

Additionally, the design of the joint was verified by means of a full scale testing program particularly developed to assess its performance. Based on the requirements of the ISO 13679 CAL IV, this testing program evaluates all the aspects related to the use of the joint, such as ease and safety of stabbing, minimum dope required and over-doping capacity, make-up and break-out characterization, galling resistance, over-torque capacity, and sealability under repeated loading and thermal cycling. The invention successfully passed all stages of the testing program.

As a matter of example, Tables 1 and 2 show results of the sealability tests (gas tightness) performed on 273 mm (10 ¾) OD and 298 mm (11 ¾) OD pipes.

| Table 1 - Pipe: 10 ¾" 99.5ppf 0.922"wt, 95KSI material | | | | | |
|---|---|---|---|---|---|
| load condition | tension [KN] | compression [KN] | internal pressure [MPa] | external pressure [MPa] | gas-tightness of connection |
| tension only | 10000 | 0 | 0 | 0 | OK |
| tension + internal pressure | 10000 | 0 | 80 | 0 | OK |
| internal pressure only | 0 | 0 | 100 | 0 | OK |
| compression + internal pressure | 0 | 7000 | 60 | 0 | OK |
| compression only | 0 | 7000 | 0 | 0 | OK |
| compression + external pressure | 0 | 7000 | 0 | 100 | OK |
| external pressure only | 0 | 0 | 0 | 100 | OK |

| Table 2 - Pipe: - 11 ¾" 106.7ppf 0.945" wt 125KSI material | | | | | |
|---|---|---|---|---|---|
| load condition | tension [KN] | compression [KN] | internal pressure [MPa] | external pressure [MPa] | gas-tightness of connection |
| tension only | 14000 | 0 | 0 | 0 | OK |
| tension + internal pressure | 14000 | 0 | 100 | 0 | OK |
| internal pressure only | 0 | 0 | 130 | 0 | OK |
| compression + internal pressure | 0 | 7000 | 70 | 0 | OK |
| compression only | 0 | 11000 | 0 | 0 | OK |
| compression + external pressure | 0 | 11000 | 0 | 120 | OK |
| external pressure only | 0 | 0 | 0 | 120 | OK |

It is known to those skilled in the art that several related variables influence the metal-to-metal seal performance, i.e.:

- thread pitch,
- thread taper,
- sealing surfaces taper,
- thread diametrical interference
- diametrical interference of sealing surfaces
- metal seal geometry

While tightness of metal-to-metal seals is improved by contact pressure (achieved by diametrical interference of both thread and metal seals), an excessive contact pressure leads to galling in the metal seals, if sliding distance is not reduced. Therefore, by increasing thread pitch, sliding distance is reduced. Also, a low thread taper and a steeper seal taper delay the seal contact for the end of the make-up. Moreover, the metal-to-metal seal geometry is also beneficial, namely the toroidal to frusto-conical configuration reduces contact area while optimizing contact pressure and sealing uniformity.

Thus, the joint of the invention successfully passed all stages of the testing program according to ISO 13679 CAL IV and met all requirements and design targets set, and achieved optimum running performance and maximum structural capacity in extending the required performance to the thick wall range.

**Claims**

1.  A threaded joint for pipes, of the type comprising a pin (1) and a box (2) in the form of a coupling, the pin (1) having at least one first end portion (22), including a first end surface (9), and a male threaded portion (30) near the at least one first end portion (22), the box (2) having at least one second end portion (23), including a second end surface (21) not facing against any surface of the pin (1) when the joint is made- up, a female threaded portion (31) near the at least one second end portion (23), the male and female threaded portions being able to mate during makeup operation, wherein the pin (1) has a first pin sealing surface (11) on the first end portion (22) in the vicinity of the first end surface (9) on a first side of the male threaded portion (30) and a second pin sealing surface (19) close to a second side of the male threaded portion (30) opposite to the first side, wherein the box (2), on a first side of the female threaded portion (31), has a first box sealing surface (12) and an abutment shoulder (10), abutting against the first pin end surface (9) after joint make-up, and having a second box sealing surface (18) close to a second side of the female threaded portion (31) opposite to the first side, the first pin sealing surface (11) mating with the first box sealing surface (12) and the second pin sealing surface (19) mating with the second box sealing surface (18) after make-up whereby an internal and an external metal-to-metal seal are produced, **characterized in that** the first pin sealing surface (11) is toroidal and the first box sealing surface (12) is frusto-conical and **in that** the second pin sealing surface (19) is frusto-conical and the second box sealing surface (18) is toroidal, wherein the taper of frusto-conical sealing surfaces of pin and box is greater than the thread taper, wherein the joint has at least one dope pocket (15, 20), between metal-to-metal seal and the threaded portion, and wherein dope pocket volume V has a magnitude within the range $0,1 (D^2) < V < 0,5 (D^2)$, where D is the pipe nominal external diameter given in mm and V is given in $mm^3$.

2.  A joint according to any preceding claim, wherein the male and female threaded portions (30, 31) have a hooked thread.

3.  A joint according to any preceding claim, wherein said first pin end surface (9) and said box abutment shoulder (10) have a negative shoulder angle ($\alpha$).

4.  A joint according to any preceding claim, wherein the male and female threaded portions have less than 5 threads per inch.

5.  A joint according to any preceding claim, wherein nominal pipe wall thickness is greater than 0,5 inch.

6.  A joint according to claim 5, wherein nominal pipe wall thickness is greater than 17,8 mm (0,7 inch)

7.  A joint according to any preceding claim, wherein the diameter of the toroidal sealing surfaces of pin and box is around 80 mm.

8.  A joint according to any preceding claim, wherein root to crest contact is provided between box thread crests and pin thread roots.

9.  A joint according to any preceding claim, wherein diametrical clearance is provided between box thread roots and pin thread crests.

10. A joint according to any preceding claim, wherein clearance is provided between stabbing flanks after make-up within the range from 0,01 mm to 0,12 mm when measured on a projection parallel to the joint axis X.

**11.** A joint according to any preceding claim, wherein the thread stabbing flank angle is comprised between 20° and 30°.

**12.** A joint according to claim 1, wherein the surface of the joint threaded portions has a dope-free surface treatment.

**Patentansprüche**

**1.** Schraubverbindung für Rohre, welche von dem Typ ist, der einen Bolzen (1) und eine Buchse (2) in Form einer Kupplung umfasst, wobei dieser Bolzen (19) mindestens einen ersten Endbereich (22), zu dem eine erste Endfläche (9) gehört, und einen Außengewindebereich (30) in der Nähe des mindestens einen ersten Endbereichs (22) aufweist, und wobei die Buchse (2) mindestens einen zweiten Endbereich (23) aufweist, zu dem eine zweite Endfläche (21) gehört, die nicht irgend einer Fläche des Bolzens (1) zugewandt ist, wenn die Verbindung zusammengeschraubt ist, sowie einen Innengewindebereich (31) in der Nähe des mindestens einen zweiten Endbereichs (23), wobei der Außengewindebereich und der Innengewindebereich imstande sind, während des Vorgangs des Zusammenschraubens ineinander zu greifen, wobei der Bolzen (1) eine erste Bolzendichtfläche (11) auf dem ersten Endbereich (22) in der Nähe der ersten Endfläche (9) auf der ersten Seite des Außengewindebereichs (3) und eine zweite Bolzendichtfläche (19) nahe einer zweiten Seite des Außengewindebereichs (30) gegenüber der ersten Seite aufweist, wobei die Buchse (2) auf der ersten Seite des Innengewindebereichs (31) eine erste Buchsendichtfläche (12) und eine Anstoßstufe (10) aufweist, welche gegen die erste Bolzenendfläche (9) nach dem Zusammenschrauben der Verbindung stößt, und eine zweite Buchsendichtfläche (18) dicht an der zweiten Seite des Innengewindebereich (31) gegenüber der ersten Seite aufweist, wobei nach dem Zusammenschrauben die erste Bolzendichtfläche (11) zur ersten Bolzendichtfläche (12) passt und die zweite Bolzendichtfläche (19) zur zweiten Buchsendichtfläche (18) passt, wodurch eine innere und eine äußere Metall/Metall-Dichtung erzeugt wird, **dadurch gekennzeichnet, dass** die erste Bolzendichtfläche (11) ringförmig ist und die erste Buchsendichtfläche (12) kegelstumpfförmig ist, und dadurch, dass die zweite Bolzendichtfläche (19) kegelstumpfförmig ist und die zweite Buchsendichtfläche (18) ringförmig ist, wobei die Konizität der kegelstumpfförmigen Dichtflächen des Bolzens und der Buchse größer als die Konizität des Gewindes ist, wobei die Verbindung mindestens eine Dotiertasche (15, 20) zwischen der Metall/Metall-Dichtung und dem mit Gewinde versehenen Bereich aufweist und wobei das Volumen V der Dotiertasche einen Wert im Bereich $0{,}1\ (D^2) < V < 0{,}5\ (D^2)$ hat, wobei D der in mm angegebene Nenn-Außendurchmesser des Rohres ist und V in $mm^3$ angegeben wird.

**2.** Verbindung nach irgendeinem der vorangehenden Ansprüche, wobei der Außengewindebereich und der Innengewindebereich (30, 31) ein Hakengewinde aufweisen.

**3.** Verbindung nach irgendeinem der vorangehenden Ansprüche, wobei die genannte erste Bolzenendfläche (9) und die genannte Anschlagstufe (10) der Buchse einen negativen Schulterwinkel ($\alpha$) aufweisen.

**4.** Verbindung nach irgendeinem der vorangehenden Ansprüche, wobei der Außengewindebereich und der Innengewindebereich (30, 31) weniger als 5 Gewindegänge pro Inch aufweisen.

**5.** Verbindung nach irgendeinem der vorangehenden Ansprüche, wobei die Nennwandstärke des Rohres größer als 12,7 mm (0,5 Inch) ist.

**6.** Verbindung nach Anspruch 7, wobei die Nennwandstärke des Rohres größer als 17,8 mm (0,7 Inch) ist.

**7.** Verbindung nach irgendeinem der vorangehenden Ansprüche, wobei der Durchmesser der ringförmigen Dichtflächen von Bolzen und Buchse etwa 80 mm beträgt.

**8.** Verbindung nach irgendeinem der vorangehenden Ansprüche, wobei der Fußpunkt/Scheitel-Kontakt zwischen dem Scheitel des Buchsengewindes und dem Fußpunkt des Bolzengewindes erfolgt.

**9.** Verbindung nach irgendeinem der vorangehenden Ansprüche, wobei zwischen den Fußpunkten des Buchsengewindes und den Scheitelpunkten des Bolzengewindes ein gewisser diametraler Abstand vorhanden ist.

**10.** Verbindung nach irgendeinem der vorangehenden Ansprüche, wobei zwischen den Aufnahmeflanken nach dem Zusammenschrauben ein Abstand im Bereich von 0,01 mm bis 0,12 mm vorhanden ist, gemessen in der Projektion parallel zur X-Achse der Verbindung.

**EP 2 325 435 B2**

**11.** Verbindung nach irgendeinem der vorangehenden Ansprüche, wobei der Winkel der Aufnahmeflanken des Gewindes zwischen 20° und 30° liegt.

**12.** Verbindung nach Anspruch 1, wobei die Fläche der Bereiche mit Rohrdichtgewinde eine dotierungsfreie Oberflächenbehandlung aufweist.


## Revendications

**1.** Joint fileté pour tuyaux, du type comprenant un axe (1) et une boîte (2) sous la forme d'un couplage, l'axe (1) ayant au moins une première portion d'extrémité (22), incluant une première surface d'extrémité (9), et une portion filetée mâle (30) près de la au moins une première portion d'extrémité (22), la boîte (2) ayant au moins une seconde portion d'extrémité (23) incluant une seconde surface d'extrémité (21) non orientée vers une surface de l'axe (1) lorsque le joint est réalisé, une portion filetée femelle (3) près de la au moins une seconde portion d'extrémité (23), les portions filetées mâle et femelle étant aptes à correspondre durant l'opération d'établissement, où l'axe (1) possède une première surface de scellement d'axe (11) sur la première portion d'extrémité (22) au voisinage de la première surface d'extrémité (9) sur un premier côté de la portion filetée mâle (30) et une deuxième surface de scellement d'axe (19) proche d'un second côté de la portion filetée mâle (30) opposée au premier côté, où la boîte (2), sur un premier côté de la portion filetée femelle (31) présente une première surface de scellement de boîte (12) et un épaulement de butée (10), butant contre la première surface d'extrémité d'axe (9) après l'établissement du joint, et ayant une seconde surface de scellement de boîte (18) proche d'un second côté de la portion filetée femelle (31) opposé au premier côté, la première surface de scellement d'axe (11) correspondant à la première surface de scellement de boîte (12), et la seconde surface de scellement d'axe (19) correspondant à la seconde surface de scellement de boîte (18) après l'établissement moyennant quoi un scellement de métal à métal interne et externe sont produits, **caractérisé en ce que** la première surface de scellement d'axe (11) est toroïdale, et la première surface de scellement de boîte (12) est tronconique, et **en ce que** la seconde surface de scellement d'axe (19) est tronconique, et la seconde surface de scellement de boîte (18) est toroïdale, où le cône des surfaces de scellement tronconiques de l'axe et de la boîte est supérieur au cône de filetage, où le joint comporte au moins une poche de dope (15, 20) entre le joint métal à métal et la portion filetée, et où le volume de de poche de dope V a une grandeur dans la plage $0,1*(DE)^2<V<0,5*(DE)^2$ où DE est le diamètre nominal externe du tuyau indiqué en mm et V et indiqué en $mm^3$.

**2.** Joint selon l'une quelconque des revendications précédentes, où les portions filetées mâle et femelle (30, 31) ont un filetage accroché.

**3.** Joint selon l'une quelconque des revendications précédentes, où ladite première surface d'extrémité d'axe (9) et ledit épaulement de butée de boîte (10) ont un angle d'épaulement négatif ($\alpha$).

**4.** Joint selon l'une quelconque des revendications précédentes, où les portions filetées mâle et femelle ont moins que 5 filetages par pouce.

**5.** Joint selon l'une quelconque des revendications précédentes, où l'épaisseur de paroi nominale du tuyau est supérieure à 0,5 pouce.

**6.** Joint selon la revendication 5, où l'épaisseur de paroi nominale du tuyau est supérieure à 17,8 mm (0,7 pouce).

**7.** Joint selon l'une quelconque des revendications précédentes, où le diamètre des surfaces de scellement toroïdales de l'axe et de la boîte est d'environ 80 mm.

**8.** Joint selon l'une quelconque des revendications précédentes, où le contact de la racine avec la crête est réalisé entre les crêtes de filetage de boîte et les racines de filetage d'axe.

**9.** Joint selon l'une quelconque des revendications précédentes, où un jeu diamétral est réalisé entre les racines de filetage de boîte et les crêtes de filetage d'axe.

**10.** Joint selon l'une quelconque des revendications précédentes, où un jeu est réalisé entre des flancs de guidage après l'établissement dans la plage de 0,01 mm à 0,12 mm lors d'une mesure sur une projection parallèle à l'axe de joint X.

**11.** Joint selon l'une quelconque des revendications précédentes, où l'angle de flanc de guidage de filetage est compris entre 20° et 30°.

**12.** Joint selon la revendication 1, où la surface des portions filetées du joint a un traitement de surface exempt de dope.

Fig. 1

Fig. 2

Fig. 3a

Fig. 3b

EP 2 325 435 B2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6851727 B
- US 6905150 B
- US 7255374 B
- US 6921110 B
- US 6543816 B
- US 2636753 A